# EUROPEAN PATENT APPLICATION

(11) **EP 3 109 806 A1**
(43) Date of publication of application: **28.12.2016**
(21) Application number: 15173811.9
(22) Date of filing: 25.06.2015
(51) Int. Cl.: G06Q 10/06

(54) **METHOD FOR GENERATING PROGNOSTIC ALERTS AND A HUMAN MACHINE INTERFACE (HMI) DEVICE THEREFOR**

(71) Applicant: Siemens Aktiengesellschaft, 80333 München (DE)
(72) Inventor: KULKARNI, Nikhil Vishwas, 560062 Bangalore (IN)
(74) Representative: Isarpatent

(57) **Abstract**

The invention relates to method and device for generating prognostic alerts in an automation environment. The method comprises monitoring a plurality of process variables associated with processes in automation environment in runtime. Further, one or more process variables from the plurality of process variables which are likely to exceed at least one pre-defined boundary condition are determined and a probability score is generated in runtime. Thereafter, at least one notification indicating that one or more process variables are likely to exceed the boundary conditions is generated based on the probability score. The prognostic alerts enable field workers to take preventive measures in order to avoid critical situations in the industrial automation environment.

## Description

This invention relates to a method and system for generating prognostic alerts on HMI devices for notifying the users if a process variable is exceeding a boundary condition.

Currently, modern factories are completely automated using industrial automation control systems. These automation control systems generally include a plurality of Input/Output (I/O) modules, engineering stations, Programmable logic Controllers (PLCs) and sensors all connected with each other using network technologies such as Ethernet, ControlNet, DeviceNet, FOUNDATION Fieldbus, PROFIBUS or other network protocols. The Human-Machine Interface (HMI) devices enable human interaction with the automation system at various sites in the factory. The HMI screens display real-time values measured at the process or equipment associated with an industrial automation environment. The HMI screens may display graphical objects associated with the processes taking place in the automation environment. For example, the HMI screens may display the process variables which are exceeding a predefined threshold and trigger an alarm.

The HMI screens are generated using graphic controls that may be web control,.NET application controls or technology independent UI controls. The invention can be applied to enhance all the controls that are defined under the International Society of Automation (ISA) graphic symbol library. The graphical controls used to build the HMI screens do not have intelligence to predict/prevent a hazardous condition in the automation environment. The graphical controls of the HMI device can only represent an alarming condition only when the process variables exceed a predefined threshold level. It is therefore necessary for the HMI screens to be able to predict an alarming state before it actually occurs, thereby giving the field workers an opportunity to take corrective action before the alarm is triggered.

At present, there are predictive algorithms being used in the automation environments. Algorithms like Model based predictive controls (MPC) are used to predict alarming situations. However, these algorithms are used in programmable logic controllers and other backend control stations. Further, these predictive algorithms are used for predicting and controlling process uncertainties rather than generating predictive alerts. Furthermore, these prediction algorithms are not implemented in the HMI devices due to various limitations.

Accordingly, it is an object of the invention to enable HMI screens with the capability of predicting and notifying a potential alarming situation.

The object of the invention is achieved by providing a method for generating prognostic alerts in an automation environment. The method comprises the step of monitoring a plurality of process variables associated with devices in automation environment in runtime. Further, the method involves determining one or more process variables from the plurality of process variables which are likely to exceed at least one boundary condition in runtime. Thereafter, the method involves generating at least one notification indicating that one or more process variables are likely to exceed the boundary conditions, based on the determination of the process variables that are likely to exceed the boundary conditions.

In an embodiment, the step of determining if the one or more process variables are likely to exceed the boundary conditions comprises, determining whether the values of the one or more process variables are greater than one or more thresholds associated with the boundary condition.

In another embodiment, the one or more thresholds associated with the boundary conditions indicate the probability of the process variables in exceeding the predefined boundary condition. The thresholds represent the probability that the process variable will exceed the boundary condition for triggering the alarm. The threshold may be a count value.

In yet another embodiment, generating at least one notification comprises generating at least one graphical object to indicate the probability of the process variables in exceeding the predefined boundary condition.

In still yet another embodiment, monitoring the plurality of process variables comprises obtaining values associated with the plurality of process variables from a programmable logic controller (PLC) device. The values of the process variables may be obtained from a backend device, such as a PLC, which continuously monitors the data from various sensors deployed in the automation environment.

In order to achieve the object a human-machine interface (HMI) device for use in an automation system is disclosed. The HMI device comprises a processor and a memory coupled to the processor. The memory includes a monitoring module configured for monitoring a plurality of process variables associated with devices in automation environment. The memory includes a prediction module, configured for determining one or more process variables from the plurality of process variables which are likely to exceed one or more boundary conditions in run-time. The memory further includes a prognostic alert module, configured for generating at least one notification indicating that one or more process variables are likely to exceed the boundary conditions.

In an embodiment, the prediction module comprises one or more thresholds associated with the boundary conditions. The thresholds represent the probability of the process variables exceeding the boundary condition. The thresholds may be a count value associated with a process variable reaching a certain value in runtime. Further, the threshold may be a time duration for which a process variable stays at a particular physical value.

In another embodiment, the prediction module is configured to determine the one or more process variables which exceed the one or more threshold conditions in runtime. The prediction module monitors the process variables in runtime which exceed the threshold conditions. The prediction module determines the process variables exceeding the threshold condition and generates a probability score.

In a variant of the invention, the prognostic alert module displays the one or more graphical objects associated with the process variables with a high probability of exceeding the boundary conditions based on the probability score generated by the prediction module.

In another variant, the prognostic alert module queues the graphical objects associated with the process variables with a high probability of exceeding a boundary condition. Alternatively, the prognostic alert module is configured to associate one or more colours to the graphical objects based on the probability of the process variables exceeding the boundary conditions.

In yet another variation, the automation environment is an industrial automation environment. The industrial automation environment may include a smelting plant and other industrial plants.

In still yet another variation, the process variables comprises variables such as temperature, pressure, voltage and current associated with the automation environment. The process variables may be associated with various processes taking place in the automation environment. For example, the process variable may be temperature of furnace and a pressure of a pressing machine.

The above mentioned and other features of the invention will now be addressed with reference to the accompanying drawings of the present invention. The illustrated embodiments are intended to illustrated, but not limit the invention.

The present invention is further described hereinafter with reference to illustrated embodiments shown in the accompanying drawings, in which:
- FIG 1: illustrates an exemplary industrial automation environment, in accordance with an embodiment;
- FIG 2: illustrates an exemplary HMI device which hosts a Human Machine Interface (HMI) screen, in accordance with an embodiment;
- FIG 3: illustrates an exemplary flow diagram for monitoring and prediction logic of the HMI device, in accordance with an embodiment; and
- FIG 4: illustrates exemplary block diagram of a graphical editor for programming the prognostic alert logic in the HMI screen, in accordance with an embodiment;
- FIG 5: illustrates an exemplary graphical user interface of a HMI screen with prognostic alerts, in accordance with an embodiment;
- FIG 6: illustrates another exemplary graphical user interface of a HMI screen with prognostic alerts, in accordance with an embodiment; and
- FIG 7: illustrates exemplary method steps involved in generating prognostic alerts in runtime on an HMI screen, in accordance with an embodiment.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

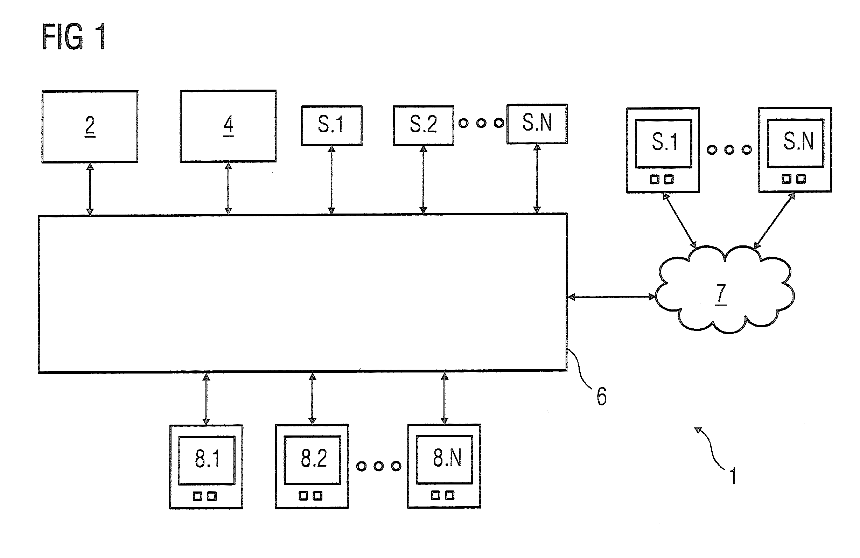

FIG 1 illustrates an exemplary industrial automation environment, in accordance with an embodiment. The industrial automation environment includes an engineering station 2, a programmable logic controller (PLC) 4, sensors 6.1 - 6.n, HMI devices 8.1 - 8.n. The engineering station 2 may be a computing device which is capable generating Human Machine Interface (HMI) screens which may be installed in the HMI devices 8.1-8.n. The PLC may include a computing device with memory and a processor which may monitor various sensors 6.1-6.n deployed at various processes in the industrial environment. The HMI devices 8.1-8.n may be deployed across the industrial environment and may be used by the field workers to control the state of operation of various processes in the industrial environment. The HMI device 8.1-8.n may host HMI screens, using which the field workers may be able to control the processes in the industrial environment. Further, the engineering station 2, the PLC 4, the sensors 6.1-6.n, the HMI devices 8.1-8.n are connected to each other using a wired or a wireless network 6 such as Ethernet, ControlNet, DeviceNet, FOUNDATION Fieldbus, PROFIBUS or other network protocols. In some cases, the HMI devices may be connected with the PLC 4 and the sensors 6.1-6.n through a wireless network.

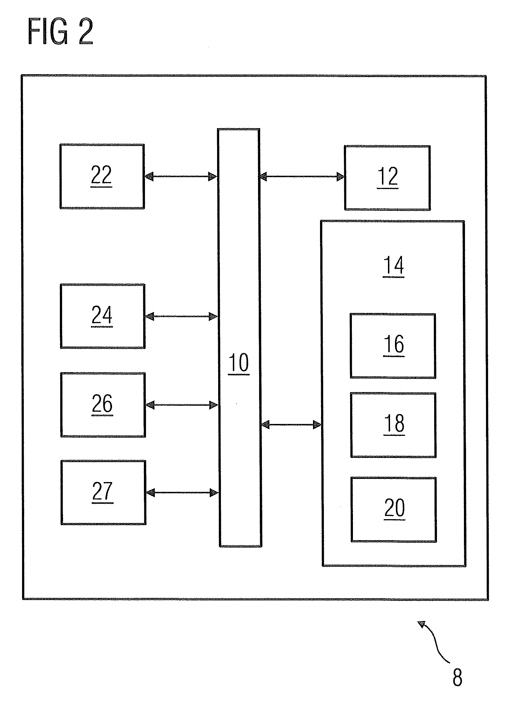

FIG 2 illustrates an exemplary HMI device 8 which hosts a Human Machine Interface (HMI) screen. The HMI device 8 includes a processor 12, a memory 14, a storage unit 22, an input/output (I/O) unit 26 and a communication module 26. The aforementioned components are connected to each other by a bus unit 10. The processor 12, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 12 may also include embedded controllers, such as generic or programmable logic devices or arrays, application specific integrated circuits, single-chip computers, and the like.

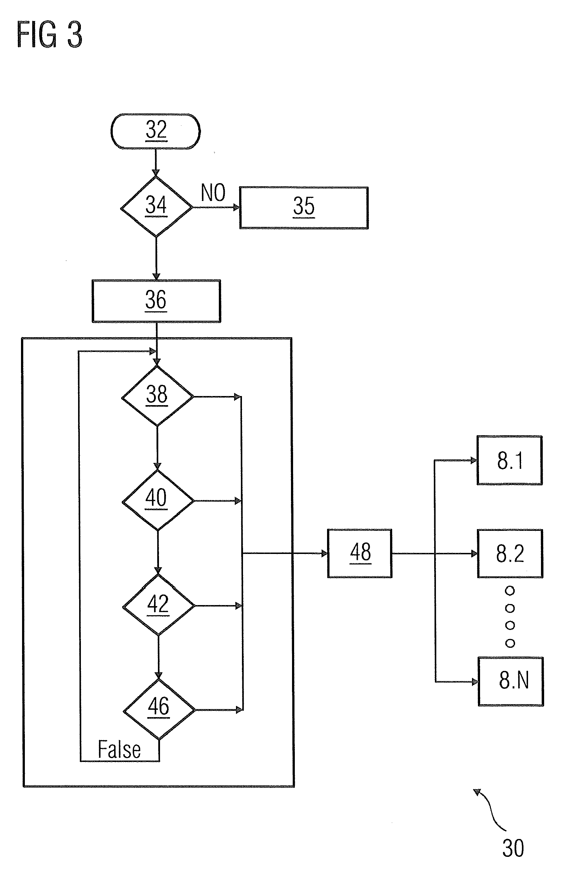

The memory 14 may be volatile memory and non-volatile memory. A variety of computer-readable storage media may be stored in and accessed from the memory 14. The memory 41 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 14 includes one or more modules for generating prognostic alerts in the automation environment, according to one or more embodiments described above. The memory 14 includes a monitoring module 16, a prediction module 18 and a prognostic alert generation module 20. The monitoring module 16 configured for monitoring a plurality of process variables associated with equipments in the automation environment. For example, the process variables may be the values such as temperature, pressure, voltage and the like. The process variables may be associated with industrial equipments such as furnaces, heaters, coolers, compressors and the like. The memory 14 includes a prediction module 18, configured for determining one or more process variables from the plurality of process variables which are likely to exceed one or more boundary conditions in run-time. The process variables that have a high probability of exceeding the boundary condition are determined based on a prediction logic which is available with the HMI screen. The prediction module 18 computes a probability score which indicates the likelihood of the process variable exceeding the boundary condition. The prediction logic is explained in detail in conjunction with FIG 3. Further, the memory 14 includes a prognostic alert module, configured for generating at least one notification indicating that one or more process variables are likely to exceed the boundary conditions based on the probability score.

The storage unit 22 may be a non-transitory storage medium configured for storing files and databases. For example, the storage unit 22 includes values of the process variables that are monitored in runtime. It can be noted that the storage unit 22 may be located at a remote location and may be accessed via a network connection.

The display unit 24 may include an LED monitor, an LCD monitor, a CRT monitor, a touch screen display, an OLED display and the like. The display means 24 is configured to display interactive HMI screens. Further, the display unit 24 is capable to accepting one or more inputs such as a keystroke, a mouse click, a gesture input and a touch input.

The input/output devices 26 may include keyboard, keypad, touch sensitive display screen, mouse and the like. The input /output devices 26 enable the user to interact with the HMI screens on the display unit 24 for controlling the operating states of various processes in the industrial automation environment. For example, the display unit 24 may display an HMI screen which includes one or more graphical objects indicating the status of various processes in the industrial automation environment. Further, the HMI screen may display the status of process variables which are acquired from ) sensors placed at various points in the industrial automation environment.

The HMI device 8 further includes a communication module 27 for communicating with the components of the automation environment. The communication module 27 may include a Wi-Fi transceiver, a network interface card (NIC) and the like.

FIG 3 illustrates an exemplary flow diagram for monitoring and prediction logic deployed in the HMI device, in accordance with an embodiment. The monitoring module 16 and prediction module 18 include process executable instructions which have the logic as explained in FIG 3. The HMI device does not communicate with any other backend device or a server to generate prognostic alerts. The prediction alert is generated by the HMI device in run-time. At step 32, the user is given an option to enable or disable the prediction logic to a particular process variable. At step 34, in case the prediction logic is enabled then the corresponding process variables are monitored for further processing as explained from step 36. In case the prediction logic is disabled for a particular process variable then the prediction functionality is disabled and the process ends at step 35.

The prognostic alert is enabled for the process variables to be monitored. The monitoring module 16 monitors the values of the process variables in real-time. Thereafter, the user needs to set the prediction parameters for the corresponding process variables. The prediction parameters may include boundary conditions for which the alert is triggered. The prediction parameters may also include threshold conditions for predicting the probability that the process variables exceed the boundary condition. For example, the boundary condition may include an alert high condition and an alert low condition. The threshold conditions may include multiple tolerance levels which indicate the probability of the process variables exceeding the alarm high or the alarm low condition. The threshold conditions are represented at steps 38, 40, 42 and 46.

In an exemplary scenario, the prognostic alert is enabled for a process variable which indicates the temperature of a furnace in the industrial automation environment. Thereafter, the user may set the boundary conditions for triggering the alarm. The boundary condition may be trigger alarm when the temperature of the furnace rises beyond 2400ºC and the temperature of the furnace goes below 1800ºC. After specifying the boundary conditions, the threshold conditions are set by the user. The threshold conditions may indicate the probability of the temperature exceeding the boundary conditions. The user may set multiple threshold conditions for a particular boundary condition. For example, the user may set a first threshold high condition 38 of 2200ºC and a second threshold high condition 40 of 2300ºC associated with the alarm high boundary condition. Further, the user may set a first threshold low condition 42 at 2000ºC and a second threshold low condition 44 at 1900ºC associated with the alarm low boundary condition.

Now the prediction module 18 obtains the real-time values of the process variables and compares the values against the multiple threshold conditions viz. 38, 40, 42 and 44. For example, the monitoring module may provide a real-time value of the temperature of the furnace to be 2249ºC. The prediction module compares the real-time value to the threshold high conditions. It is determined that the temperature is exceeding the first threshold high condition and a probability score is generated. The prediction module 18 may generate a probability score of .3 as it is the first threshold low condition. The probability score of 0.3 indicates that there is a 30% chance that the temperature is likely to exceed the boundary condition.

The prognostic alert module 20, thereafter, generates notifications 48 which may be displayed in the HMI devices 8.1 - 8.N, which host the HMI screen. A field worker may observe the notification and take corrective action to prevent the alarm from triggering. The prognostic alert module may generate one or more graphical objects to indicate the probability of the process variable of exceeding the boundary condition. Since, the temperature of the furnace has exceeded the first threshold low condition; the prognostic alert module generates a graphical object which is placed in the main screen like a pop-up. Further, the prognostic alert module may queue up multiple process variables which are likely to exceed the boundary conditions. For examples, the other process variables may be pressure of a compression unit, speed of a motor, current value for a heating element and the like.

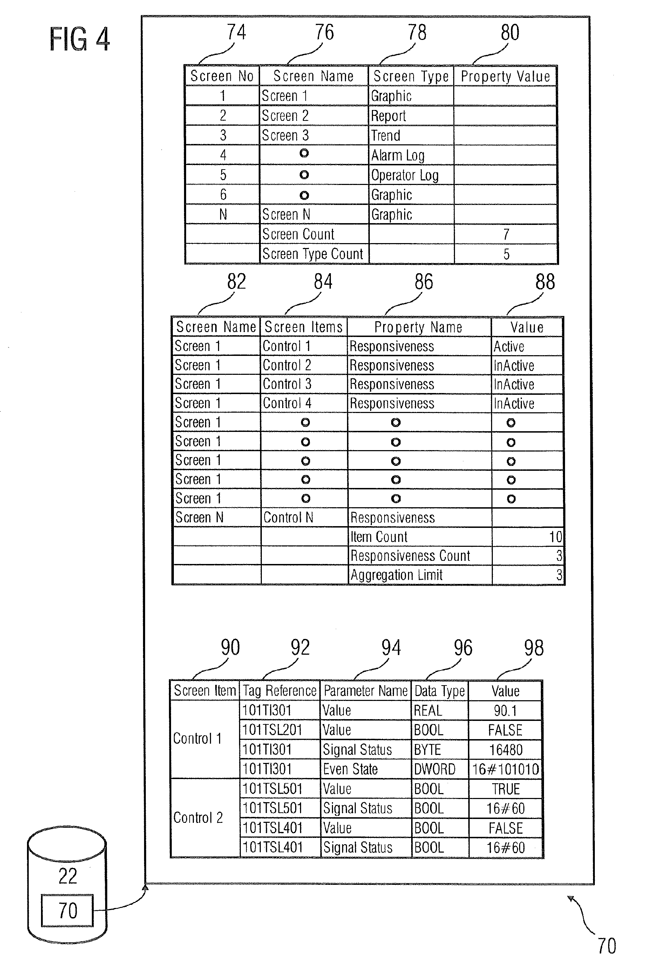

FIG 4 illustrates exemplary block diagram of a graphical editor for programming the dataset for implementing the prognostic alert in the HMI screen, in accordance with an embodiment. The prognostic alert may be executed using engineering stations 2 present in the industrial automation environment 1. In the engineering station 2, we can program the dataset which is going to be monitored for generating prognostic alerts by the HMI screens. The invention can be applied to provide prognostic alert logic to all the controls of the HMI screens that are defined under the International Society of Automation (ISA) graphic symbol library. As shown in FIG 4, the HMI devices may host a number of HMI screens for displaying process variables associated with various processes in the industrial automation environment. The engineering station 2 may have means to specify the screen type 78 and provide a screen name 76. In FIG 4, it can be observed that there are different screens configured to display different aspects of the industrial automation environment. Further, the screens may have one or more controls for controlling the processes taking place in the industrial automation environment. In the engineering station, the user can specify if the prognostic alert feature is to be enabled for a particular process variable. In an example, the property name 86 and the value field 88 denotes if the prognostic alert has been enabled for the controls in the screen 1. Thereafter, the threshold conditions for the process variables may be specified for each of the controls in order to facilitate the generation of prognostic alert.

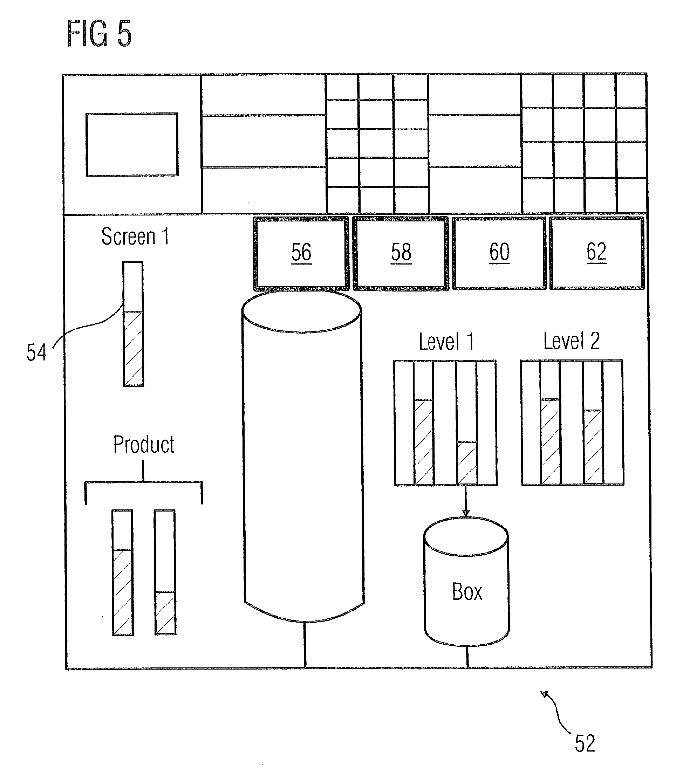

FIG 5 illustrates an exemplary graphical user interface of a HMI screen 52 with prognostic alerts, in accordance with an embodiment. In the HMI screen 52 includes one or more graphical objects representing a plurality of controls associated with the industrial automation environment 1. The HMI screen 52 may display the status of the process variables which includes levels of a fluid, temperature values and pressure values. Further, when prognostic alert feature is enabled for any of the process variables in the industrial automation environment, then the values of such process variables are monitored in run-time. Further, when the values of the process variables exceed threshold conditions then the prognostic alert generation module 20 generate one or more graphical objects such as alert object 56, 58, 60 and 62. In an embodiment, the alert object 56, 58, 60 and 62 may be queued based on the severity, as shown in FIG 5. In an exemplary scenario, the process variables which have a high probability score, and therefore a high likelihood of exceeding the boundary condition are queued first followed by the less critical process variables.

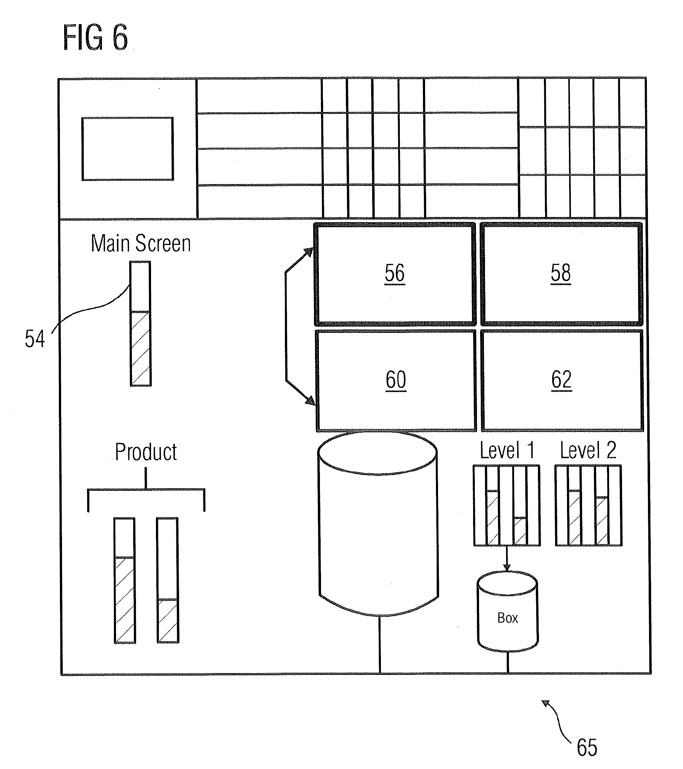

FIG 6 illustrates another exemplary graphical user interface of a HMI screen 65 with prognostic alerts, in accordance with an embodiment. In this embodiment, the HMI screen displays the alert objects 56, 58, 60 and 62 in different colours to indicate the severity. In an exemplary scenario, if the probability score of a process variable is 0.9, which indicates that there is a 90% chance that the process variable will exceed the boundary condition, then the alert object for such process variables may be displayed with a RED colour. In another exemplary scenario, if the probability score for a process variable is 0.4, indicating that there is a 40% chance that the process variable exceeds the boundary condition, then the alert object for the process variable may be coloured YELLOW to indicate lesser severity.

An exemplary computation of the probability score is as shown in Table 1.

**Table 1**

| Threshold level | Probability score |
|---|---|
| First threshold | 0.25 |
| Second threshold | 0.50 |
| Third threshold | 0.75 |
| Fourth threshold | 1 |

As shown in Table 1, there are multiple threshold values. In an example, the threshold values may be temperature values of a furnace. We can see that the probability value increases with the threshold value that is breached by the process variables that is being monitored.

In another example, the probability score may depend on a count value as shown in table 2. For example, if a process variable reaches a particular threshold value for 8 times then the probability score is computed to be 0.33. In case the process variable reaches a particular threshold value 12 times then the prediction module 18 outputs a score of 0.66. In case, the process variable reaches the threshold value for 16 times, then it is critical and a prognostic alert is generated with high severity.

**Table 2**

| Count value | Probability score |
|---|---|
| 8 | 0.33 |
| 12 | 0.66 |
| 16 | 1.0 |

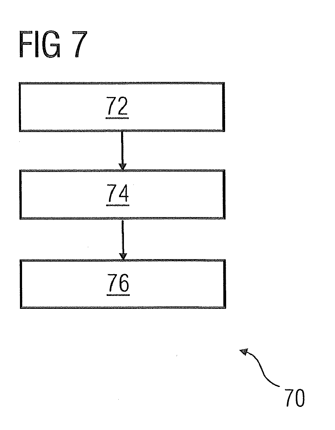

FIG 7 illustrates exemplary method steps involved in predicting an alarming condition in runtime on an HMI screen, in accordance with an embodiment. At step 72, a plurality of process variables associated with devices in automation environment are monitored in runtime. The process variables to be monitored may be specified in the engineering stations present in the industrial automation environment. At step 74, one or more process variables from the plurality of process variables which are likely to exceed at least one pre-defined boundary condition are determined and a probability score is generated in runtime. The boundary conditions and the threshold conditions may be specified using the engineering station. The prediction module 18 in the HMI device hosting the HMI screen refers to the predefined boundary conditions and threshold conditions to generate the probability score. At step 76, at least one notification indicating that one or more process variables are likely to exceed the boundary conditions is generated based on the probability score. The notifications may be graphical objects which are populated on the HMI screen which indicates the process variables which are likely to exceed the boundary conditions which may trigger an alarm.

The embodiments of the invention provide prognostic alerts to the field workers in an automation environment. The method and device enables the field workers to take preventive actions to avoid triggering of alarms and reduce the downtime of the industrial automation environment. Further, the prognostic alerts are generated by the HMI devices in runtime. The prognostic alert generation logic is built into the HMI devices and do not need a back end server to perform the processing. Furthermore, the invention can be applied to provide prognostic alert logic to all the controls that are defined under the International Society of Automation (ISA) graphic symbol library. Thus, the method and device disclosed herein provides prognostic alerts and reduces the occurrence of critical conditions in the industrial automation environment.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method for generating prognostic alerts on a HMI device (8) in an automation environment, the method comprising:
monitoring a plurality of process variables (72) associated with the processes in the automation environment in runtime;
determining one or more process variables (74) from the plurality of process variables which are likely to exceed at least one pre-defined boundary condition and generating a probability score in runtime;
generating, by the processor, at least one notification (76) indicating that one or more process variables are likely to exceed the boundary conditions based on the probability score.

2. The method in accordance with claim 1, wherein the determining if the one or more process variables are likely to exceed the boundary conditions comprises:
determining whether the values of the one or more process variables are greater than one or more thresholds associated with the boundary condition.

3. The method in accordance with claim 2, wherein one or more thresholds associated with the boundary conditions indicate the probability of the process variables in exceeding the predefined boundary condition.

4. The method in accordance with claim 2 or 3, wherein the threshold comprises a count value, time duration and a maximum value of a physical quantity.

5. The method according to any of the preceding claims, wherein generating at least one notification comprises:
generating at least one graphical objects to indicate the probability of the process variables in exceeding the predefined boundary condition.

6. The method according to any of the preceding claims,
wherein the step of monitoring the plurality of process variables comprises:
obtaining values associated with the plurality of process variables from a programmable logic controller (PLC) device.

7. A human-machine interface (HMI) device (8.1-8.N) for use in an automation environment (1), the HMI device (8.1-8.N) comprising:
a processor (12); and
a memory (14) coupled to the processor (12), wherein the memory (14) comprises:
a monitoring module (16), configured for monitoring a plurality of process variables associated with devices in automation environment;
a prediction module (18), configured for determining one or more process variables which are likely to exceed one or more boundary conditions and generating one or more probability scores in runtime;
a prognostic alert module (20), configured for generating at least one notifications indicating that one or more process variables are likely to exceed the boundary conditions based on the one or more probability scores.

8. The HMI device in accordance with claim 7, wherein the prediction module (20) comprises one or more thresholds conditions (38, 40, 42, 46) associated with the boundary conditions.

9. The HMI device in accordance with claim 7 or 8, wherein the prediction module (20) is configured to determine the one or more process variables which exceed the one or more threshold conditions (38, 40, 42, 46).

10. The HMI device according to any of the preceding device based claims, wherein the prognostic alert module (20) displays the one or more graphical objects (56, 58, 60, 62) associated with the process variables which are likely to exceed the boundary conditions.

11. The HMI device according to any of the preceding device based claims, wherein the prognostic alert module (20) queues the graphical objects (56, 58, 60, 62) associated with the process variables, which are likely to exceed a boundary condition, and associates one or more colours to the graphical objects (56, 58, 60, 62) based on the probability of the one or more process variables from the plurality of process variables, exceeding the boundary conditions.

12. The HMI device according to any of the preceding device based claims, wherein the automation environment (1) is an industrial automation environment.

13. The HMI device according to any of the preceding device based claims, wherein the process variables comprises variables such as temperature, pressure, voltage and current associated with the automation environment.
